# EUROPEAN PATENT APPLICATION

(11) **EP 4 607 056 A1**
(43) Date of publication of application: **27.08.2025**
(21) Application number: 22962631.2
(22) Date of filing: 20.10.2022
(51) Int. Cl.: F16F 1/32, F16F 15/04, F16F 7/104

(54) **SHOCK ABSORBER WITH ADJUSTABLE ELASTIC CONSTANT**

(71) Applicant: Universidad Pública De Navarra, 31006 Pamplona (ES)
(72) Inventor: ALFARO LÓPEZ, José Ramón, 31006 Pamplona (ES); BENITO AMURRIO, Marta, 31006 Pamplona (ES); PÉREZ EZCURDIA, María Amaya, 31006 Pamplona (ES); LATORRE BIEL, Juan Ignacio, 31006 Pamplona (ES)
(74) Representative: Balder IP Law, S.L.
(86) International application number: PCT/ES2022/070676
(87) International publication number: WO 2024/084107

(57) **Abstract**

The present invention relates to a damping device with adjustable elastic constant comprising a membrane spring and an adjustment system for adjusting the elastic constant of the membrane spring. The membrane spring comprises at least one circular flexing crown with at least two annular flexing arms, one continuous circular crown that is adjacent to and concentric with the circular flexing crown and one channel associated with each annular flexing arm. Each channel is adjacent to and concentric with the annular flexing arm along at least part of its length. The adjustment system further comprises a fixing element that is inserted in each of the channels and is configured to move along the respective channel, thereby modifying a portion of the length of the annular flexing arm adjacent to the channel that flexes modifying the elastic constant of the damping device.

## Description

### OBJECT OF THE INVENTION

The present invention belongs generally to the field of mechanics, and more specifically to the field of damping devices for the absorption of vibrations generated by any type of vibration generation or transmission source.

### BACKGROUND OF THE INVENTION

Most industrial equipment, machinery or vehicles produce vibrations generated by imbalanced rotating elements, coupling misalignments, component wear, etc. Moreover, the vibration generation or transmission source can also be external to the element or device to be protected or isolated from vibrations. For example, vibrations can be due to natural phenomena such as earthquakes or in the case of vehicles, vibrations can be transmitted by the road itself due to the existence of potholes or irregularities on the surface thereof. These vibrations, regardless of their origin, cause a wide range of problems such as noise, fatigue and breakage of certain components, operational dysfunctions, etc. To prevent these problems, damping devices of different types are usually placed between the vibration generation or transmission source and the surface, element, device or system to be isolated from said vibrations, in order to eliminate them or at least minimize them.

Said damping devices can be, among many others, spring dampers, hydraulic dampers, gas dampers, rheological dampers, etc. The springs of spring dampers can also be different types such as compression springs, torsion springs, traction springs, disc springs, membrane springs, etc. Many of the damping systems and devices marketed today incorporate coil springs.

Additionally, these damping devices can be used for other functions such as preloading, energy storage, use as a mechanical low-pass filter, obtaining an elastic response to a given load, etc.

When the compactness of the designed machinery is a highly conditioning factor, membrane springs having a highly appropriate ratio between their damping performance and overall dimensions can be used. The greater the importance of the functional role played by the spring in its mechanical unit, the more critical this performance/dimension ratio will be. Membrane springs, also known as flat springs, are very compact and have a high elasticity that will depend in any case on the material from which they are made, as well as on the number, size and geometry of the elastic arms available.

The problem with conventional damping devices, regardless of their nature or type, lies in the fact that each spring responds to a mechanical behavior defined by its characteristics according to a function 'F=-K*x', where 'F' is the force exerted by the spring, 'x' is the elongation or variation experienced by the length of the spring and 'K' is the elastic constant of the spring. To measure the elastic constant 'K' of a spring, the deformation 'x' caused when different values of force 'F' are applied to the spring is measured. This means that each damping device will have a fixed type of natural mode of vibration and therefore there is a need to manufacture a different damping device with its 'K' being constant for each specific application. Moreover, in those applications in which the magnitude of the generated vibrations varies, the damping devices tend to be oversized, since they are not capable of adapting to said variations, to absorb or minimize the vibration peaks, even if they occur in very sporadically. This oversizing of the damping devices, which have elastic constants that are too high for the vibrations to which they are subjected most of the time, can cause an inadequate response at certain times of low vibration load on the surface or device to be isolated.

Therefore, there is a need in the state of the art to develop damping devices having a high performance/dimension ratio while at the same time allowing a dynamic and very significant adjustment of their elastic constant 'K' in a simple way, both before their installation and even once they have been installed *"in situ".*

### DESCRIPTION OF THE INVENTION

A first object of the present invention relates to a damping device with adjustable elastic constant as described in claim 1. Particular embodiments of the invention are described in the dependent claims.

The damping device with adjustable elastic constant object of the invention comprises a membrane spring and an adjustment system for adjusting the elastic constant of the membrane spring coupled to the membrane spring itself. As described herein, membrane spring refers to a sheet made of an elastic material, preferably, elastic steel or another material with elastic properties such as composite materials, plastics, graphene, etc., which comprises at least two flexing arms and is capable of absorbing the energy produced by a vibration generation or transmission source, to which it is attached or with which it is in contact. Said membrane springs are flat elements which can have a highly variable thickness depending on the application in which they are installed. For example, their thickness (distance along the axial shaft) can vary from several microns, when they are designed to be used in the field of microelectronics, to tens of centimeters or even meters when they are installed in building foundations to absorb the vibrations generated by earthquakes. Likewise, their dimensions along the transverse axis can vary between millimeters and meters depending on the application for which they are designed. In any case, the dimensions of the membrane spring will depend on the magnitude of the vibrations to be absorbed. Furthermore, they can have different geometries such as, for example, circular, rectangular, square, oval, etc. Preferably, the membrane springs will be disc-shaped. These membrane springs work such that, if a force is applied in the axial direction to the center of the membrane spring, said spring undergoes deformation and movement in said axial direction as a result of the deformation along the entire length of its flexing arms.

The membrane spring of the present invention comprises at least one circular flexing crown which in turn comprises at least two annular flexing arms (elastic arms), preferably separated from one another by radial cuts, and a continuous circular crown that is adjacent to and concentric with the at least one circular flexing crown. Said continuous circular crown is a sheet of continuous material, i.e., without openings, deformations or cuts. The annular flexing arms are the elements of the membrane spring that absorb flexing stresses in the axial direction transmitted by the source which generates or the element which transmits the vibrations to be dampened. Therefore, the sum of the behavior of these annular flexing arms will constitute the overall elastic behavior of the membrane spring and, accordingly, of the damping device. The behavior of these annular flexing arms will in turn depend on the elastic properties of the material from which they are manufactured and on their dimensions.

The membrane spring further comprises a channel associated with each annular flexing arm of each circular flexing crown. Each channel is adjacent to and concentric with the annular flexing arm along at least part of its length and is located at an edge of the at least one circular flexing crown opposite the continuous circular crown. Preferably, the circular flexing crown defines one of the annular edges, be it the inner edge or the outer edge, of the annular flexing arms, and the channels define at least part of the opposite edge of the annular flexing arms.

Additionally, the adjustment system for adjusting the elastic constant comprises a fixing element that is inserted in each of the channels and is configured to move along the respective channel, thereby modifying a portion of the length of the annular flexing arm adjacent to the channel that flexes modifying the elastic constant of the damping device. In other words, depending on the position at which they are fixed in the channel, these fixing elements will determine if the entire arm or only a part of the arm can flex axially. When fixed at the end of the channel located in correspondence with the origin of the arm (end of the arm through which it is joined to the rest of the membrane spring), the fixing elements do not restrict the flexing of said arm. As the fixing element moves along the channel to its opposite end, the portion of the arm which can flex becomes shorter. Only the portion of the annular flexing arm between the fixing element and the free end of the arm is the portion of said arm which can flex axially.

Preferably, one end of the channel (origin) will be located in correspondence with the portion of the annular flexing arm joined to the rest of the membrane spring. Preferably, the channel will furthermore have a length smaller than the length of the annular flexing arm with which it is associated so that there will always be a portion of the arm that can flex, even though the fixing element is brought to the end opposite the origin of the channel. Alternatively, the length of the channel and of the corresponding arm can be the same such that the fixing element at its end opposite the origin of the arm can block the axial flexing of the annular flexing arm entirely.

In some embodiments, the relative length of the channels with respect to the annular flexing arms of each annular flexing crown is the same or can be different. Furthermore, this relative length of the channels with respect to the annular flexing arms can be the same for all the annular flexing crowns of the membrane spring or can be different between them. Preferably, the relative length of the channels with respect to the annular flexing arms will be constant for the entire membrane spring.

In some embodiments, the width of the annular flexing arms corresponds with the width of the circular flexing crown and is demarcated between respective cuts made annularly in the membrane spring.

In some embodiments, the membrane spring comprises a continuous circular crown between every two circular flexing crowns. This continuous circular crown, which is a sheet of continuous material (i.e., without cuts, deformations or openings) will act as a bridge which makes the flexing of the annular flexing arms of each circular flexing crown independent.

In some embodiments, the fixing element has a H-shaped longitudinal section and is formed by a rod that is inserted in the channel and two stops coupled to respective ends of the rod with a width greater than the width of the channel. These fixing elements will create physical bridges between portions of continuous material of the membrane spring and the annular flexing arms, such that the joining between both is stiffened, modifying the portion of the arm that can flex and, therefore, modifying the elastic constant 'K' of the damping device.

In some embodiments, the fixing element is formed by a screw, a bushing and a nut. This configuration of the fixing elements allows an easy adjustment and fixing of the position of the fixing elements at the required points in the corresponding channel.

In some embodiments, the fixing elements of the channels associated with the annular flexing arms of one and the same circular flexing crown are joined to one another by means of an adjustment ring. The adjustment ring is configured to rotate, both clockwise and counterclockwise, causing an identical and simultaneous annular movement of the fixing elements in their respective channels. In this way, the length of the portions of the annular flexing arms that can flex axially of one and the same annular flexing crown can be modified in the same manner and in a single step. In said embodiments, the fixing elements can be crewed to the adjustment ring or may at least partially form an integral part of the ring itself. For example, the rod or screw together with one of the stops may form integral part of the ring, while the lower stop, for example, a nut, can be coupled to the free end of the rod or screw once it has been inserted in the channel. Alternatively, each of the fixing elements can be moved individually to similar or different points in the respective channels associated with one and the same circular flexing crown.

In some embodiments, the channel and the corresponding fixing element comprise a fixing mechanism for fixing the position of the fixing element with respect to the channel. Although fixing mechanisms such as the use of a screw and a nut as part of the fixing element itself have been described above, it has also been envisaged for the channels to have inner corrugated or sawtooth-shaped edges, such that the fixing elements engage with the valleys of said edges. In this way, the fixing element can engage with and disengage from the different valleys of the inner edge, being able to modify the portion of the arm that flexes in a swift and simple manner. Alternatively, the inner edges of the channels may have grooves or notches in predefined positions along their entire length where the fixing elements will be inserted and fixed.

In some embodiments, the fixing elements are configured to be moved along the length of their respective channels manually or automatically. An operator may loosen or release the fixing elements, place them again in their new position in the channel and fix them. Alternatively, a controller, based on the measurements of the magnitude of the vibrations transmitted to the damping device taken by a vibration sensor, may calculate the elastic constant 'K' needed to minimize or eliminate the measured vibrations and determine the position of the fixing elements along the corresponding channels in order to obtain said elastic constant 'K'. Once said positions are calculated, the fixing elements are placed in the mentioned positions either manually or automatically. For example, the damping device may have a motor to act individually on each fixing element or may have a motor to act on sets of fixing elements, for example, it may act on each adjustment ring.

In some embodiments, the membrane spring comprises a central opening for fixing a shaft that can be coupled to a vibration source. This vibration source can be a vibration generation or transmission mass. The shaft, once inserted in the central opening of the membrane spring, can be fixed to spring by means of nuts, pins, threaded, or welded thereto. The vibration generation or transmission mass can be any element, component, device or system that generates or transmits vibrations, regardless the nature thereof.

In some embodiments, the membrane spring comprises a plurality of openings through which it is fixed to a support that can be coupled to a surface to be protected from vibrations. Screws, bolts, studs or pins, among other fixing elements, can be used for fixing the membrane spring to the support. In turn, the support can be fixed to the surface to be protected by means of bolts, screws, studs, pins or can be welded directly. The surface to be protected from vibrations can be directly the floor, a surface of a device, a vehicle, a system, a machine, etc.

A second object of the present invention relates to a vibration damping system, comprising a damping device as described above, a main support to which the membrane spring is coupled, wherein the main support can be coupled to a surface to be protected from vibrations and a shaft which is coupled to the membrane spring through a central opening of the membrane spring, wherein the shaft can be coupled to a vibration generation or transmission mass.

In some embodiments, the damping system comprises a vibration measurement sensor coupled to the shaft and a controller configured to determine a position of the fixing elements relative to the respective channels based on the vibration measured by the vibration sensor. In other words, the controller, based on the measurements obtained from a vibration sensor, can calculate the elastic constant 'K' needed to minimize or eliminate the vibrations measured at a specific time and determine the position of the fixing elements along the corresponding channels in order to obtain said elastic constant 'K'. To that end, the system can have motors for the linear movement of the fixing elements along their respective channels, being able to move said fixing elements individually or in groups (for example, if they are joined by means of adjustment rings). Once said positions are calculated, the fixing elements are placed in the mentioned positions either manually or automatically. This adjustment of the elastic constant 'K' can be carried out continuously or periodically. This controller can be at least one of a central processing unit (CPU), a semiconductor-based microprocessor, a graphic processing unit (GPU), a field-programmable gate array (FPGA) or another electronic circuit suitable for executing calculations and controlling the movement and fixing of the fixing elements.

The damping device object of the present invention has various advantages with respect to the state of the art. For example, the membrane spring can be manufactured with various geometries, sizes and materials and its design can incorporate a suitable number of annular flexing crowns where each of said crown comprises two or more annular flexing arms, obtaining damping devices with a wide range of elastic behaviors in a simple manner. Furthermore, by changing the position of the fixing elements in the channels, the portion of the annular flexing arms that can flex is modified, dynamically adjusting the elastic constant 'K'. This allows the ability to attenuate a very wide range of vibrations. The elastic constant 'K' of the damping device can be adjusted once the damping device is installed and depending on the response of the equipment in which it is installed. Its adjustment can also be automated, depending on the changes that gradually take place in the system in terms of its modes of vibration. The membrane spring works under traction and compression in a similar manner. The membrane springs is very easy to manufacture at a low cost, allowing the use of a wide range of sheet thicknesses and sizes, which allows designing a large variety of device dimensions, applicable thereby to a wide range of masses to be controlled. Furthermore, the ratio between the height of the damping device to the working length is very low, compared to other springs such as coil springs. The working length of the membrane spring is very large with respect to the thickness of the sheet from which the membrane spring is manufactured. Therefore, the damping device takes up less space than other similar devices of the state of the art.

The damping device object of the present invention can be used in the anchoring of machines or machine components, and can be installed in the damping system of vehicles replacing the conventional coil or leaf spring with this damping device with adjustable elastic constant.

### BRIEF DESCRIPTION OF THE FIGURES

To complete the description and in order to improve the understanding of the invention, a set of figures is provided. Said figures form an integral part of the description and illustrate different embodiments of the invention, which should not be interpreted as limiting the scope of the invention, but as examples of how the invention can be carried out.
Figures 1A and 1B show a perspective view and an exploded view, respectively, of the damping device, according to a particular embodiment of the invention.
Figure 2 shows a plan view of the membrane spring of Figures 1A and 1B.
Figure 3 shows a plan view of a membrane spring with a single annular flexing crown, according to a particular embodiment of the invention.
Figure 4 shows a plan view of a membrane spring with two annular flexing crowns and with four annular flexing arms in each annular flexing crown, according to a particular embodiment of the invention.
Figures 5A to 5C show three plan and perspective views of the damping device of Figure 1 being subjected to a force in the axial direction and with the fixing elements being fixed at three different points of their respective channels.
Figures 6A, 6B and 6C show a perspective view, an exploded view and a cutaway side view, respectively, of a vibration damping system, according to a particular embodiment of the invention.
Figure 7 shows a perspective view of a machine supported on four damping systems such as those shown in Figures 6A-C.
Figures 8A and 8B show a perspective view and an exploded view, respectively, of a damping device which incorporates a fixing mechanism for fixing the position of the fixing elements with respect to the channels, according to a particular embodiment of the invention.

### PREFERRED EMBODIMENT OF THE INVENTION

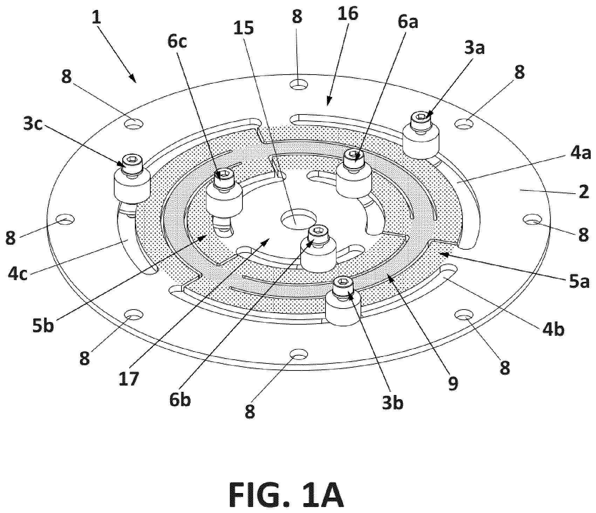

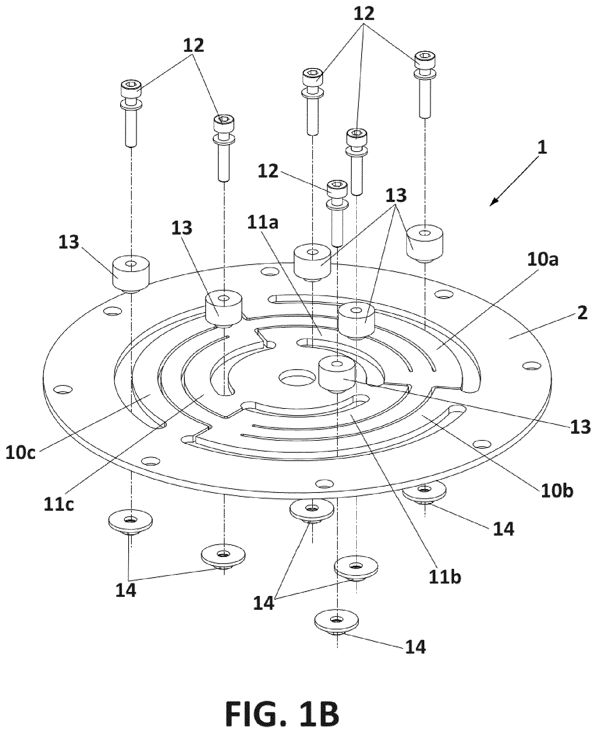

Figures 1A and 1B show a perspective view and an exploded view, respectively, of the damping device 1, according to a particular embodiment of the invention. It should be understood that the damping device 1 depicted in Figures 1A and 1B can include additional components and that some of the components described herein can be eliminated and/or modified without departing from the scope of the damping device 1.

The damping device 1 is formed by a membrane spring 2, having a circular or disc geometry, and by six fixing elements. The three outermost fixing elements 3a-c are inserted in three channels 4a-c associated with the outermost annular flexing crown 5a and wherein the three innermost fixing elements 6a-c are inserted in three channels 7a-c associated with the innermost annular flexing crown 5b. The membrane spring 2 has a plurality of openings 8 close to its outer perimeter through which screws, bolts, rods, studs or the like (not shown) can be passed in order to fix same on the surface (not shown) to be isolated from vibrations, either directly or with the interposition of a support (not shown). Said spring 2 comprises two circular flexing crowns 5a-b (shown with shading in the form of a mesh) separated from one another by a continuous circular crown 9 (shown with dotted shading). The continuous circular crown 9 is a circular sheet made of the same material as the rest of the membrane spring 2 which has no cuts, openings or deformities, and separates the two circular flexing crowns 5a-b by way of a bridge, making the flexing of the annular flexing arms 10a-c and 11a-c of the two circular flexing crowns 5a-b, respectively, independent.

In this particular embodiment, the fixing elements 3a-c and 6a-c are formed by screws 12 (with a washer) that pass through bushings 13 and are fixed by means of nuts 14 (with their respective washers) at the lower end thereof, such that the bushing 13 together with the body of the screw 12 act as the rod which is introduced through the respective channels 4a-c and 7a-c while the head of the screws 12 and the nuts 14 act as stops, which act as a physical bridge between the portions of continuous material (outer ring 16 and inner ring 17 of the spring 2 which have no openings, cuts, or irregularities) of the membrane spring 2 and the annular flexing arms 10a-c and 11a-c, such that the joining between both is stiffened, modifying the portion of the arm 10a-c and 11a-c capable of flexing and, therefore, modifying the elastic constant 'K' of the damping device 1.

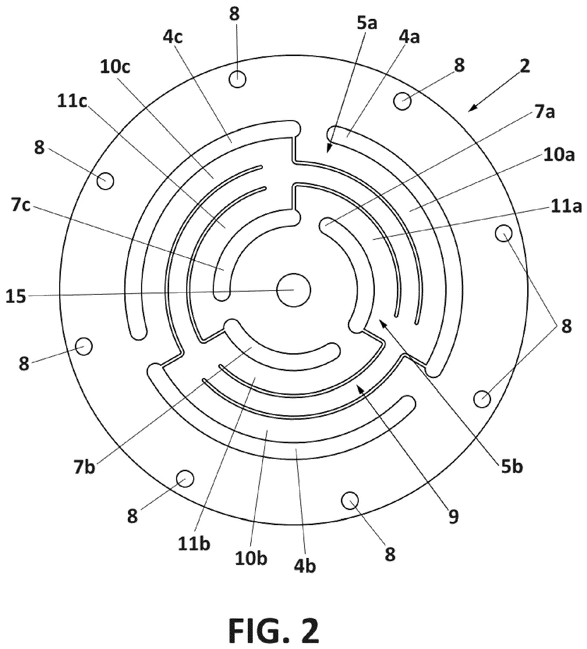

Figure 2 shows a plan view of the membrane spring 2 of Figure 1. Said spring 2 comprises two circular flexing crowns 5a-b which are formed by three annular flexing arms 10a-c and 11a-c, respectively, separated from one another by radial cuts. The outermost circular flexing crown 5a is demarcated by the three annular channels 4a-c at its outermost annular edge and by the continuous circular crown 9 at its innermost annular edge. In turn, the innermost circular flexing crown 5b is demarcated by the three annular channels 7a-c at its innermost annular edge and by the continuous circular crown 9 at its outermost annular edge. In this embodiment, the annular flexing crowns 5a-b, the continuous circular crown 9 and the channels 4a-c and 7a-c are concentric with one another. The membrane spring 2 also has a central opening 15 through which a shaft (not shown), which would be attached to the vibration source, passes. Furthermore, in this embodiment the channels 4a-c and 7a-c have a length slightly smaller than the length of the arms 10a-c and 11a-c with which they are associated.

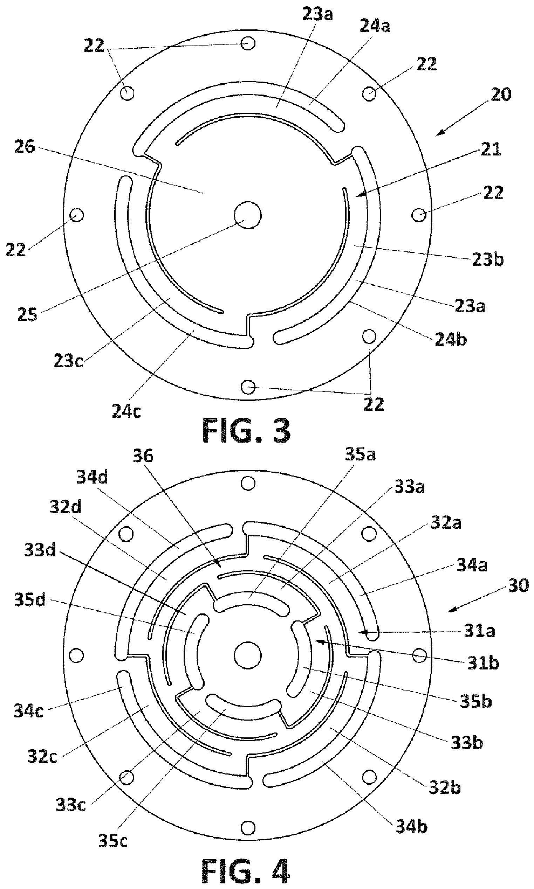

Figure 3 shows a plan view of a membrane spring 20 with a single annular flexing crown 21, according to a particular embodiment of the invention. This membrane spring 20 is similar to the one shown in Figure 2 but having only a single annular flexing crown 21 similar to the circular flexing crown 5a of Figure 2 and where the continuous circular crown that demarcates the innermost annular edge of the annular flexing crown 21 is integrated with the inner portion 26 of the membrane spring 20 that in turn demarcates the central opening 25. The annular flexing crown 21 is furthermore demarcated by the channels 24a-c at its outermost annular edge.

The spring 20 also has a circular or disc geometry and has a plurality of openings 22 close to its outer perimeter for fixing on the surface to be isolated from vibrations. The circular flexing crown 21 is formed by three flexing arms 23a-c separated from one another by radial cuts.

Figure 4 shows a plan view of a membrane spring 30 with two annular flexing crowns 31a-b and four annular flexing arms 32a-d and 33a-d in each annular flexing crown 31a-b, according to a particular embodiment of the invention. This embodiment of the membrane spring 30 is very similar to the membrane spring 2 of Figures 1 and 2, except that each annular flexing crown 31a-b is formed by four annular flexing arms 32a-d and 33a-d and, therefore, there are four channels 34a-d and 35a-d associated with each annular flexing crown 31a-b. Like in the embodiment of Figures 1 and 2, there is a continuous circular crown 36 between both annular flexing crowns 31a-b.

While the embodiments shown in Figures 1 to 4 show membrane springs with one or two circular flexing crowns and three or four annular flexing arms in each circular flexing crown, in other embodiments, the membrane spring may have a different number of circular flexing crowns and annular flexing arms. Furthermore, although the embodiments shown in Figures 1 to 4 also show a constant ratio of the lengths of the channels to their respective annular flexing arms in each circular flexing crown, and furthermore between the circular flexing crowns (when there is more than one) of one and the same membrane spring, in other embodiments this ratio can be variable within one and the same annular flexing crown or between the circular flexing crowns (when there is more than one) of one and the same membrane spring. Although in the embodiments shown in Figures 1 to 4 the width of the annular flexing crowns is always the same, in other embodiments these annular flexing crowns may have different widths.

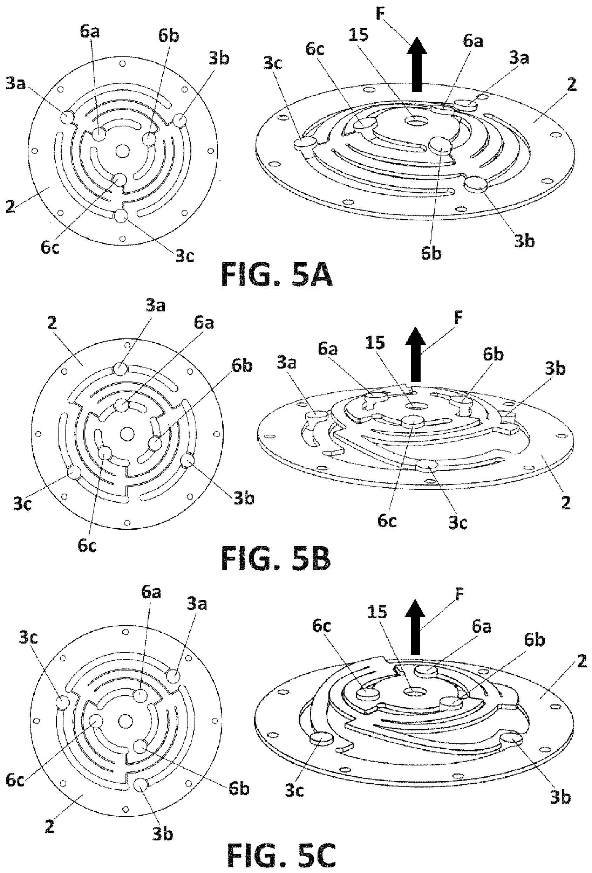

Figures 5A to 5C show three perspective views of the damping device 1 of Figures 1 and 1B, being subjected to a force in the axial direction and with the fixing elements 3a-c, 6a-c being fixed at three different points of its respective channels 4a-c, 7a-c.

If a force F is applied to the center of the membrane spring 2, in correspondence with its central opening 15, and its outer perimeter is fixed by means of, for example, screws passing through the openings 8 and screwed onto a fixed surface, the membrane spring 2 undergoes an axial deformation as shown in Figures 5A-C. As can be seen, movement in the axial direction results from deformation along at least part of the length of the annular flexing arms 10a-c and 11a-c.

Figure 5A shows an embodiment in which the fixing elements 3a-c and 6a-c are located at the end opposite the origin of the respective channels 4a-c and 7a-c, i.e., in correspondence with the ends of the annular flexing arms 10a-c and 11a-c where the radial cuts separating same from the contiguous annular flexing arms 10a-c and 11a-c are located. By placing the fixing elements 3a-c and 6a-c at these points, the flexing capacity of the arms 10a-c and 11a-c is restricted as much as possible, so the elastic constant 'K' of the damping device is minimized. Given that the arms 10a-c and 11a-c have a length greater than the length of the channels 4a-c and 7a-c, the damping device 1 flexes slightly in the axial direction even by restricting the flexing capacity of the arms 10a-c and 11a-c as much as possible.

Figure 5B shows an embodiment in which the fixing elements 3a-c and 6a-c are located at the midpoint of the respective channels 4a-c and 7a-c. In this way, flexing of the portion of the annular flexing arms 10a-c and 11a-c located between the fixing elements 3a-c and 6a-c themselves and the origin of the arms 10a-c and 11a-c is restricted, while flexing of the portion of the annular flexing arms 10a-c and 11a-c located between the fixing elements 3a-c and 6a-c and the end of the arms 10a-c and 11a-c where the radial cuts are located is allowed.

Figure 5C shows an embodiment in which the fixing elements 3a-c and 6a-c are located at the origin of the respective channels 4a-c and 7a-c, i.e., in correspondence with the ends of the annular flexing arms 10a-c and 11a-c at which they are joined to the outer ring 16 and inner ring 17 of the spring 2. Placing the fixing elements 3a-c and 6a-c at these points allows the maximum flexing of the arms 10a-c and 11a-c, so the elastic constant 'K' of the damping device 1 is maximized.

In the three embodiments of Figures 5A-C, the flexing capacity of the damping device, i.e., its elastic constant 'K', results from the elastic properties of the material from which the membrane spring is manufactured, from the number of annular flexing arms and the length (annular distance), width (radial distance) and thickness (axial distance) thereof, as well as from the position of the fixing elements with respect to their corresponding channels.

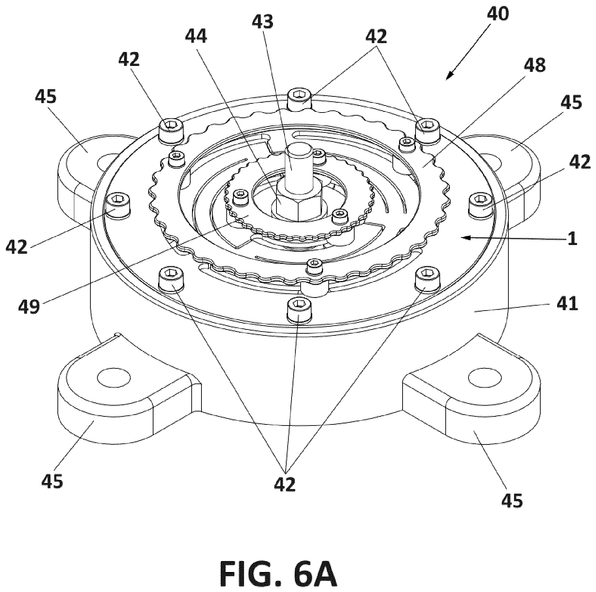

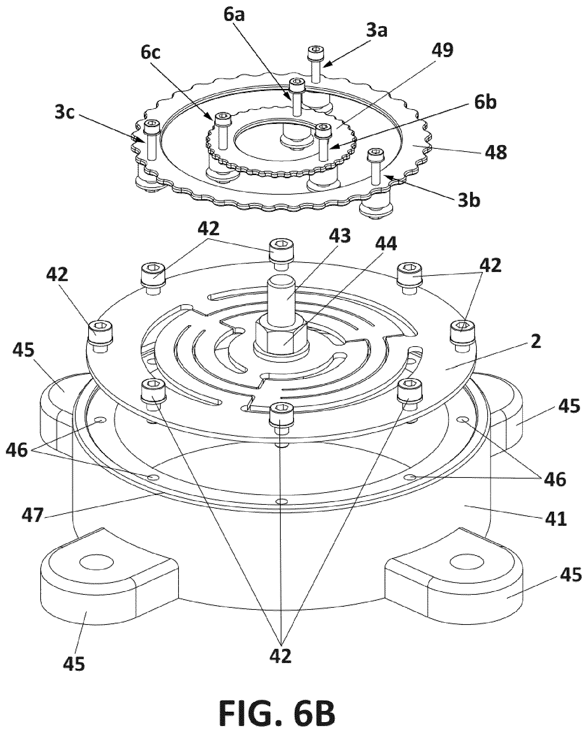

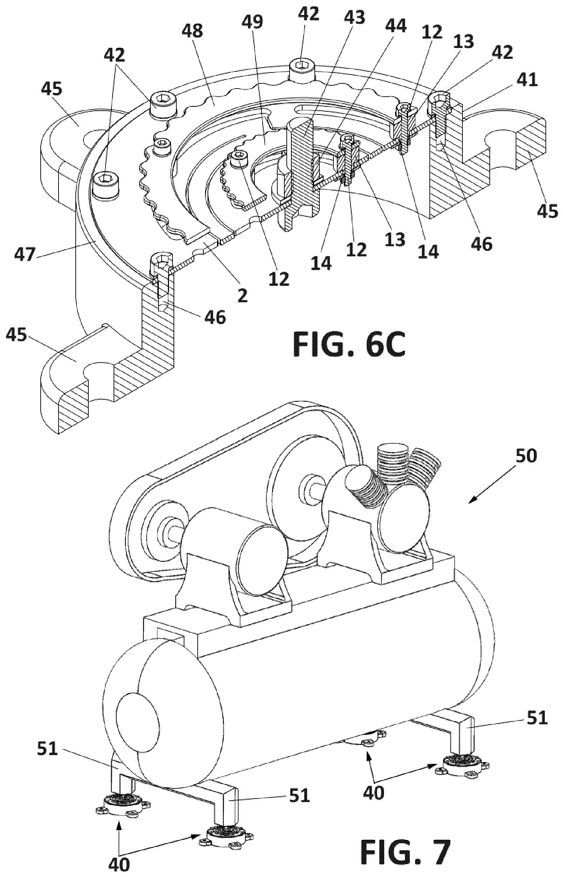

Figures 6A, 6B and 6C show a perspective view, an exploded view and a cutaway side view, respectively, of a vibration damping system 40, according to a particular embodiment of the invention. It should be understood that the vibration damping system 40 depicted in Figures 6A-C can include additional components and that some of the components described herein can be eliminated and/or modified without departing from the scope of the vibration damping system 40.

This damping system 40 comprises a damping device 1 such as the one shown in Figure 1, a support 41 to which the damping device 1 is coupled by means of eight screws 42 and a shaft 43 that is inserted in the central opening 15 of the membrane spring 2. This shaft 43 is a threaded screw that is inserted in the central opening from below and fixed thereto by means of a nut 44. The opposite end of the shaft 43 is attached to a vibration generation or transmission mass (not shown). The support 41, having a circular outer perimeter, has four flanges 45 in its side wall and in correspondence with its lower edge whereby it is fixed, using screws, bolts, rods, studs or the like, to the surface (not shown) to be isolated from vibrations. As can be seen in Figures 6A and 6B, the body of the support 41 is a cylindrical portion having eight openings 46, where the screws 42 are inserted, and an outer flanging 47 at its upper edge such that the membrane spring 2 is at least partially contained in the support 41. In this embodiment, the fixing elements 3a-c are joined to one another by an outer adjustment ring 48 and the fixing elements 6a-c are joined to one another by an inner adjustment ring 49. These adjustment rings 48, 49 allow integrally moving the three fixing elements associated with each annular flexing crown. In other embodiments, these rings 48, 49 can be joined to one another such that all the fixing elements of the damping device are moved integrally.

Figure 7 shows a perspective view of a machine 50, specifically compression equipment, fixed on the surface to be isolated from vibrations with the interposition of four damping systems 40 such as those shown in Figures 6A-C. In this embodiment, it is intended to prevent the vibrations generated by the compression equipment during operation from being transmitted to the floor of an industrial installation. The shafts 43 of the four damping systems 40 are fixed to the respective legs of the compression equipment 50 by means of introducing the shafts 43 in respective openings of said legs. For example, these shafts 43 can be screwed or welded to said legs or fixed by means of bolts or the like.

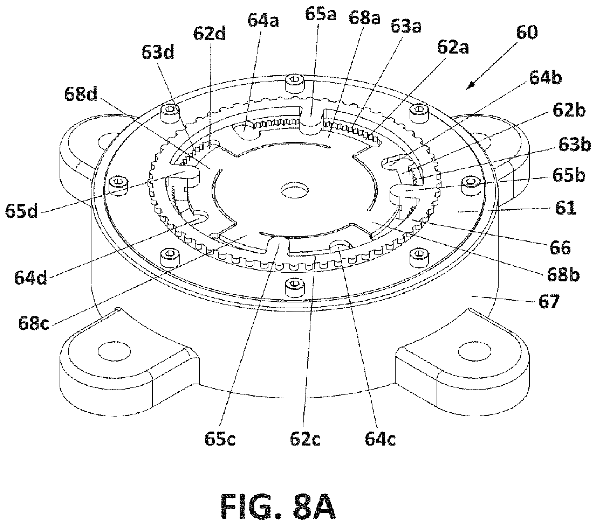

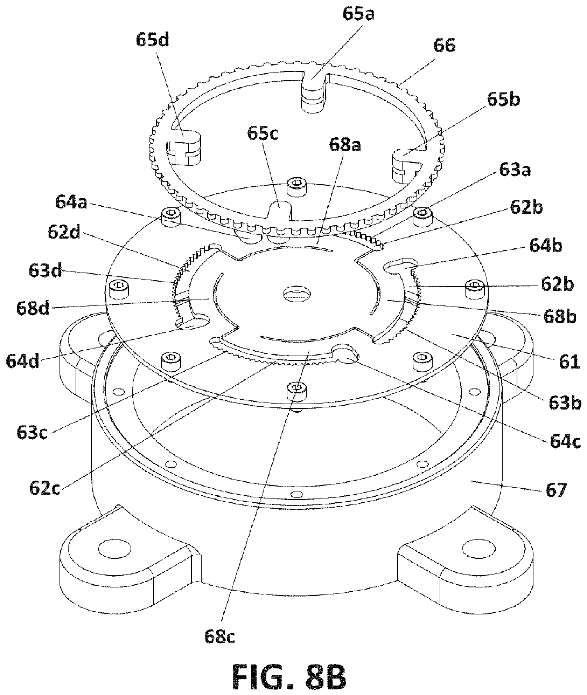

Figures 8A and 8B show a perspective view and an exploded view of a vibration damping system 60 which incorporates a fixing mechanism for fixing the position of the fixing elements 65a-d with respect to the respective channels 62a-d, according to a particular embodiment of the invention. It should be understood that the vibration damping system 60 depicted in Figures 8A-B can include additional components and that some of the components described herein can be eliminated and/or modified without departing from the scope of the vibration damping system 60.

In this embodiment, the vibration damping system 60 comprises a membrane spring 61 such as the one shown in Figure 3 but having four channels 62a-d and annular flexing arms 68a-d instead of three and in which the channels 62a-d have a sawtooth-shaped outer edge 63a-d and an elongated hole 64a-d in correspondence with the origin thereof. This elongated hole 64a-d allows removing and placing the fixing elements 65a-d with respect to the respective channels 62a-d given that said fixing elements 65a-d are individual pieces, instead a set of screw, bushing and nut, which are furthermore integrally joined to the adjustment ring 66. These fixing elements 65a-d have H-shaped axial section and has, in its central notch and in correspondence with the sawtooth-shaped outer edge 63a-d of the channels 62a-d, a protuberance (not shown) that fits into the valleys of the mentioned outer edge 63a-d, with the fixing elements 65a-d being fixed therein. In this way, the operation of adjusting and fixing the position of the fixing elements 65a-d in the channels 62a-d is much quicker than using other solutions.

The vibration damping system 60 of Figures 8A and 8B also shows a support 67, such as the one shown in Figures 6A-C, to which the membrane spring 61 is screwed, and which can be screwed onto the surface to be isolated from vibrations.

## Claims

1. A damping device with adjustable elastic constant, **characterized in that** it comprises:
a membrane spring, and
an adjustment system for adjusting the elastic constant of the membrane spring coupled to the membrane spring;
wherein the membrane spring comprises:
at least one circular flexing crown comprising at least two annular flexing arms;
a continuous circular crown that is adjacent to and concentric with the at least one circular flexing crown, the continuous circular crown being made of a sheet of continuous material;
a channel associated with each annular flexing arm of each circular flexing crown, wherein each channel is adjacent to and concentric with the annular flexing arm along at least part of its length and is located at an edge of the at least one circular flexing crown opposite the continuous circular crown; and
wherein the adjustment system for adjusting the elastic constant comprises a fixing element that is inserted in each of the channels and is configured to move along the respective channel, thereby modifying a portion of the length of the annular flexing arm adjacent to the channel that flexes modifying the elastic constant of the damping device.

2. The damping device according to claim 1, wherein each circular flexing crown is demarcated by a continuous circular crown at one of its edges and by the channels associated with each of the annular flexing arms of the circular flexing crown at its other edge.

3. The damping device according to claim 1 or 2, wherein the width of the annular flexing arms corresponds with the width of the circular flexing crown and is demarcated between respective cuts made annularly in the membrane spring.

4. The damping device according to any one of the preceding claims, wherein the membrane spring comprises a continuous circular crown between every two circular flexing crowns.

5. The damping device according to any one of the preceding claims, wherein the fixing element has a H-shaped longitudinal section and is formed a rod that is inserted in the channel and two stops coupled to respective ends of the rod with a width greater than the width of the channel.

6. The damping device according to claim 5, wherein the fixing element is formed by a screw, a bushing and a nut.

7. The damping device according to any one of the preceding claims, wherein the fixing elements of the channels associated with the annular flexing arms of one and the same circular flexing crown are joined to one another by means of an adjustment ring, such that the adjustment ring is configured to rotate causing an identical and simultaneous annular movement of the fixing elements along the respective channels.

8. The damping device according to any one of the preceding claims, wherein the channel and the corresponding fixing element comprise a fixing mechanism for fixing the position of the fixing element with respect to the channel.

9. The damping device according to any one of the preceding claims, wherein the fixing elements are configured to be moved along the length of their respective channels and to be fixed therein manually or automatically.

10. The damping device according to any one of the preceding claims, wherein the membrane spring comprises a central opening for fixing a shaft that can be coupled to a vibration generation and/or transmission mass.

11. The damping device according to any one of the preceding claims, wherein the membrane spring has a disc shape.

12. The damping device according to any one of the preceding claims, wherein the membrane spring comprises a plurality of openings through which it is fixed to a support that can be coupled to a surface to be protected from vibrations.

13. The damping device according to any one of the preceding claims, wherein the membrane spring is made of an elastic material, preferably elastic steel.

14. A vibration damping system, comprising:
a damping device as described in any one of claims 1 to 13,
a main support to which the membrane spring is coupled, wherein the main support can be coupled to a surface to be protected from vibrations; and
a shaft which is coupled to the membrane spring through a central opening of the membrane spring, wherein the shaft can be coupled to a vibration generation and/or transmission mass.

15. The vibration damping system according to claim 14, comprising at least one vibration sensor coupled to the shaft and configured to measure a magnitude of vibrations transmitted by the vibration generation and/or transmission mass to the shaft and a controller configured to determine a position of the fixing elements relative to the respective channels in which they are inserted based on the magnitude of the vibration measured by the at least one vibration sensor.
